Europäisches Patentamt

European Patent Office

Office européen des brevets

(11) Veröffentlichungsnummer: **0 123 034**
**A2**

(12) # EUROPÄISCHE PATENTANMELDUNG

(21) Anmeldenummer: **84101509.2**

(22) Anmeldetag: **14.02.84**

(51) Int. Cl.³: **B 29 F 1/08**
**B 29 F 3/08**

(30) Priorität: **08.03.83 DE 3308138**

(43) Veröffentlichungstag der Anmeldung:
**31.10.84 Patentblatt 84/44**

(84) Benannte Vertragsstaaten:
**AT BE CH FR GB IT LI LU NL SE**

(71) Anmelder: **Riedel Kälte- und Klimatechnik GmbH**
**Kilianstrasse 102**
**D-8500 Nürnberg(DE)**

(72) Erfinder: **Riedel, Georg**
**Förrenbacher Strasse 31**
**D-8500 Nürnberg 30(DE)**

(74) Vertreter: **Göbel, Matthias, Dipl.-Ing.**
**Pruppacher Hauptstrasse 5-7**
**D-8501 Pyrbaum-Pruppach(DE)**

(54) Anordnung zum Temperieren von Einrichtungen für die Kunststoffherstellung oder Kunststoffverarbeitung.

(57) Bei einer Anordnung zum Temperieren von Einrichtungen für die Kuntstoffherstellung oder Kunststoffverarbeitung weist zum Einstellen oder Halten vorbestimmter Temperaturen mit extrem engen Temperaturtoleranzen der Extruder (1) eine Anzahl unabhängige Temperierstellen (2 bis 11) in Reihe auf, wobei vom für den Kunststoff einlaufseitigen Ende desselben beginnend mindestens eine Temperierstelle (2) in einem Kaltwasserkreislauf und die restlichen Temperierstellen (3 bis 11) in einem Warmölkreislauf und einem Heißölkreislauf liegen. Die Temperatur der im Kaltwasserkreislauf liegenden Temperierstelle (2) ist durch Verändern der Durchflußmenge und die Temperaturen der restlichen Temperierstellen (3 bis 11) sind bei konstanten Durchflußmengen durch Mischungsänderungen von Warmöl und Heißöl mittels den Temperierstellen unabhängig zugeordneten Mischventilen (31) einregel- und haltbar.

./...

**DIPL.-ING. M. GÖBEL**
**PATENTANWALT**

**8501 PYRBAUM-PRUPPACH**
PRUPPACHER HAUPTSTRASSE 5-7
TELEFON 09180/678
TELEGRAMM GOEPATENT PYRBAUM
TELEX 624407 GOEPA

BANKKONTEN:
VOLKSBANK NÜRNBERG 45233 BLZ 76090000
COMMERZBANK NÜRNBERG 8300907 BLZ 76040061

- 1 -

Riedel Kälte- und Klimatechnik GmbH
D 8500   Nürnberg


Anordnung zum Temperieren von Einrichtungen für die
Kunststoffherstellung oder Kunststoffverarbeitung


Die Erfindung betrifft eine Anordnung zum Temperieren von Einrichtungen für die Kunststoffherstellung oder Kunststoffverarbeitung, insbesondere bei Extrudern.

Es ist bekannt, die Temperierung von Extrudern mittels Wärmeträgeröl vorzunehmen. Die Temperierung erfolgt durch Ein- und Ausschalten des Wärmeträgeröls für den gesamten Extruder. Darüber hinaus ist auch bekannt, mehrere Temperierstellen an einem Extruder vorzusehen und jeder Temperierstelle eine unabhängige Temperiereinrichtung mit Ein- und Ausschaltfunktionen für Wärmeträgeröl zuzuordnen. Bei den bekannten Extrudern zeigt sich insgesamt der Mangel, daß die Temperiereinrichtungen nur ungenaue Einregelungen der Temperaturen mit groben Toleranzen zulassen.

Es ist Aufgabe der Erfindung Maßnahmen zum Einstellen und Halten vorbestimmter Temperaturen mit extrem engen Temperaturtoleranzen, insbesondere bei Extrudern zu schaffen.

Erfindungsgemäß ist diese Aufgabe dadurch gelöst, daß der Extruder eine Anzahl unabhängige Temperierstellen in Reihe aufweist, daß vom für den Kunststoff einlaufseitigen Ende desselben beginnend mindestens eine Temperierstelle in einem Kaltwasserkreislauf und die restlichen Temperierstellen in einem Warmölkreislauf und einem Heißölkreislauf liegen und daß die Temperatur der im Kaltwasserkreislauf liegenden Temperierstelle durch Verändern der Durchflußmenge und die Temperaturen der restlichen Temperierstellen bei konstanten Durchflußmengen durch Mischungsänderungen von Warm- und Heißöl mittels den Temperierstellen unabhängig zugeordneten Mischventilen einregel- und haltbar sind. Bei bevorzugter Ausführung liegt eine Temperierstelle im Kaltwasserkreislauf und der Rest der Temperierstellen in den zusammenfaßbaren Warmöl- und Hießölkreisläufen. Als Wärmeträgermedium dient in den Warmöl- und Heißölkreisläufen jeweils ein an sich bekanntes Wäremträgeröl. Mittels der Flüssigkeitskreisläufe und deren Zusammenwirken ist eine exakte Einstellung und Konstanthaltung von vorbestimmten Temperaturen in den Temperierstellen erreichbar, wodurch im Extruder zur Kunststoffverarbeitung wie bisher Granulat verarbeitet und zusätzlich eine Herstellung und Verarbeitung von Kunststoffen aus chemischen Bestandteilen derselben unter Umgehung einer zuvorigen Grandulatherstellung möglich ist. Die Verarbeitung der chemischen Bestandteile erfordert zum Ablauf der chemischen Reaktionen in bestimmten Abschnitten des Extruders exakt eingestellte Temperaturen, die mit der Anordnung mit einer Temperaturtoleranz von z.B. $\pm$ 0,5 Grad Celsius eingehalten werden können. Es versteht sich, daß eine beliebige Anzahl Temperierstellen

Anwendung finden können und daß diese vorbestimmte Temperaturen, z.B. im Produktionsstadium aufrechterhalten oder über eine bestimmte Zeit, z.B. im Anfahrstadium gefahren werden können. Außerdem gibt die Anordnung die Möglichkeit, Heizungen und Kühlungen in Abstimmung auf den Kunststoff und entsprechend dem Herstellungs- und Arbeitsverlauf eintreten zu lassen. Die Mischventile erbringen ferner den Vorteil einer Energieeinsparung, da sie Aufheizungen und Abkühlungen nur stattfinden lassen, wenn dies als erforderlich angesehen wird.

In Ausgestaltung der Anordnung ist vorgesehen, daß der Kaltwasserkreislauf durch ein Kältemittel in einem Wärmetauscher auf eine vorbestimmte, veränderbare Kaltwassertemperatur, z.B. 8 Grad Celsius kühlbar ist. Zweckmäßig ist dem Kaltwasserkreislauf ein Bypass zugeordnet und die Temperierstelle im Bypass angeordnet. Die Temperaturen dieser Temperierstelle sind somit durch einfaches Verstellen eines zwischen dem Bypass und dem Kaltwasserkreislauf vorgesehenen Steuerventils veränderlich.

Ferner ist vorgesehen, das Warmöl des Warmölkreislaufs in einem Heizgefäß mittels einer elektrischen Heizeinrichtung zu erwärmen und durch am Kaltwasserkreislauf abzweigbares Kaltwasser in einem Wärmetauscher zu kühlen. Weiter kann das Heißöl des Heißölkreislaufs in einem Heizgefäß mittels einer elektrischen Heizeinrichtung heizbar und der Heißölkreislauf über eine Drosselstelle am Warmölkreislauf angelegt sein.

In weiterer Ausgestaltung der Anordnung ist vorgesehen, den Wärmetauscher für Kaltwasser mit Vorlauf- und Rücklaufleitungen und mindestens den Zu- und Ableitungen für das Kältemittel sowie die Heizgefäße für Warmöl und Heißöl mit den zugehörigen Vor- und Rückläufen und einer Kühleinrichtung für das Warmöl zu einem gemeinsamen Gerätesatz zusammenzufassen. Darüber hinaus können die Mischventile für das Warmöl und Heißöl bzw. die Mischventile und das Steuerventil für den Bypass gemeinsam in einer Ventilstation angeordnet sein. Zur besseren Übersichtlichkeit der Anordnung können ferner die Einrichtungen zur Überwachung und Steuerung der Temperaturen in den Temperierstellen und in den Kreisläufen für Kaltwasser, Warmöl und Heißöl gemeinsam in einem schrankförmigen Aufnahmebehälter untergebracht sein. Hierdurch ist die Möglichkeit gegeben, den Gerätesatz platzsparend im Freien aufzustellen, während der Schaltschrank in einem Raum getrennt von einer Ventilstation zum Einsatz kommen kann.

Es entspricht der Erfindung, daß die Steuerung der Anordnung manuell oder selbsttätig, z.B. durch Mikroprozessoren erfolgen und die Temperaturen geschrieben werden können.

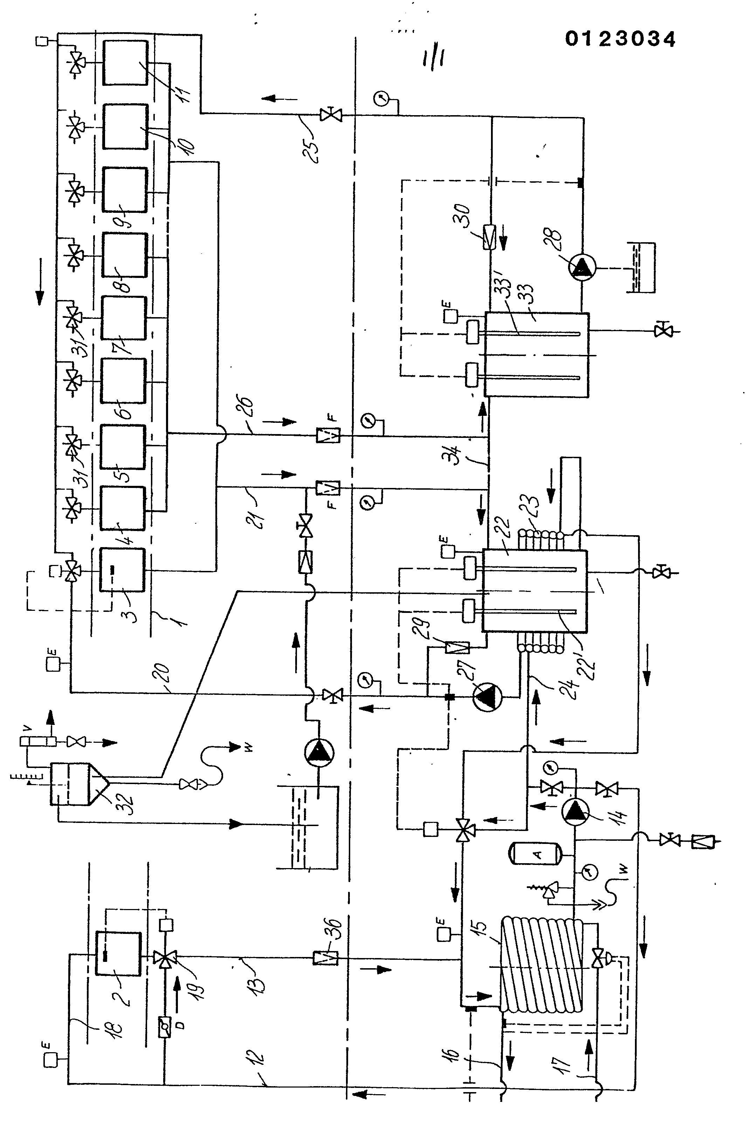

Die Erfindung ist in der Zeichnung an einem schematischen Beispiel erläutert.

Mit 1 ist ein Extruder und mit 2 bis 11 sind Temperierstellen an diesem bezeichnet. Die Temperierstellen 2 bis 11 sind in Reihe am Extruder ausgebildet. Die Temperierstelle 2 liegt an eine Vorlaufleitung 12 und eine Rücklaufleitung 13 eines Kaltwasserkreislaufs an, der eine Pumpe 14, ein Überstromventil 36 und einen Wärmetauscher 15 aufweist, dem über Leitungen 16, 17 Kältemittel zuführbar ist. Durch das Kältemittel erfolgt eine permanente Kühlung des Kaltwassers etwa bis zu 8 Grad Celsius. Beim Ausführungsbeispiel ist den Vor- und Rücklaufleitungen 12, 13 ein Bypass 18 zugeordnet, in dem die Temperierstelle 2 liegt. Über ein Steuerventil 19 ist die Durchflußmenge im Bypass und damit die Temperatur der Temperierstelle 2 regelbar. Temperierstellen 3 bis 11 liegen über eine Vorlaufleitung 20 und Rücklaufleitung 21 in einem Warmölkreislauf, dessen Wärmeträgeröl in einem Heizgefäß 22 mittels Heizelektroden 22' erwärmbar ist. Gleichzeitig sind die Rohrleitungen 23 des Heizgefäßes 22 durch in Röhren 24 abgezweigtes Kaltwasser beeinflußbar. Die Temperierstellen 3 bis 11 liegen weiter in einem Heißölkreislauf, dessen Wärmeträgeröl bis zu 350 Grad Celsius aufheizbar ist. Die Temperierstellen 3 bis 11 sind hierzu über eine Vorlaufleitung 25 und Rücklaufleitung 26 mit einem Heizelektroden 33' aufweisenden Heizgefäß 33 verbunden. Es versteht sich, daß in den Warmöl- und Heißölkreisläufen jeweils eine Förderpumpe 27 und 28 angeordnet und Überströmventile 29, 30 als Sicherungen vorgesehen sind. Den Temperierstellen 3 bis 11 sind Mischventile 31 zugeordnet, an die die Vorlaufleitungen 20, 25 gemeinsam anliegen und durch die bei Beibehaltung der Durchflußmenge ausschließlich durch Verändern des Mischungsverhältnisses von Warm- und Heißöl vorbestimmte Temperaturen, z.B. zwischen 70 Grad Celsius und 150 Grad Celsius in den Temperierstellen einregelbar sind. Die Temperaturen in den Temperierstellen 2 bis 11 sind mit engen Toleranzen einregelbar und den chemischen Reaktionen in den Extruderabschnitten anpaßbar. Am Heizgefäß 22 liegt ein Ausgleichsgefäß 32 an. Mit 35 ist ein Ölvorratsbehälter bezeichnet. Wesentlich ist noch, daß der Heißölkreislauf und der Warmölkreislauf über eine Drosselstelle 34 permanent miteinander in Verbindung stehen. Es versteht sich, daß eine notwendige Aufheizung des Kaltwassers gegebenenfalls durch Warmöl möglich ist. Die Zeichnung zeigt weiter, daß die Temperierstellen 2 bis 11 getrennt von den zu einem Gerätesatz zusammengefaßten Wärmetauscher 15 für Kaltwasser und den Heizgefäßen 22, 33 für Warm- und Heißöl ausgebildet sein können und daß die Mischventile 31 bzw. die Mischventile 31 und das Steuerventil 19 eine Ventilstation bilden können.

0123034

DIPL.-ING. **M. GÖBEL**
PATENTANWALT

- 1 -

**8501 PYRBAUM-PRUPPACH**
PRUPPACHER HAUPTSTRASSE 5-7
TELEFON 09180/678
TELEGRAMM GOEPATENT PYRBAUM
TELEX 624407 GOEPA

BANKKONTEN:
VOLKSBANK NÜRNBERG 48233 BLZ 76090000
COMMERZBANK NÜRNBERG 8300907 BLZ 76040061

Riedel Kälte- und Klimatechnik GmbH
D 8500 Nürnberg

Patentansprüche

1. Anordnung zum Temperieren von Einrichtungen für die Kunststoffherstellung oder Kunststoffverarbeitung, insbesondere bei Extrudern, d a d u r c h  g e k e n n - z e i c h n e t, daß der Extruder (1) eine Anzahl unabhängige Temperierstellen (2 bis 11) in Reihe aufweist, daß vom für den Kunststoff einlaufseitigen Ende desselben beginnend mindestens eine Temperierstelle (2) in einem Kaltwasserkreislauf und die restlichen Temperierstellen (3 bis 11) in einem Warmölkreislauf und einem Heißölkreislauf liegen und daß die Temperatur der im Kaltwasserkreislauf liegenden Temperierstelle (2) durch Verändern der Durchflußmenge und die Temperatur der restlichen Temperierstellen (3 bis 11) bei konstanten Durchflußmengen durch Mischungsänderungen von Warmöl und Heißöl mittels den Temperierstellen unabhängig zugeordneten Mischventilen (31) einregel- und haltbar sind.

2. Anordnung nach Anspruch 1, dadurch gekennzeichnet, daß die Warm- und Heißölkreisläufe an sich bekanntes Wärmeträgeröl aufweisen.

3. Anordnung nach Anspruch 1, dadurch gekennzeichnet, daß eine Temperierstelle (2) im Kaltwasserkreislauf und die restlichen Temperierstellen (3 bis 11) im Warmöl- und Heißölkreislauf liegen.

4. Anordnung nach Anspruch 1 und 3, dadurch gekennzeichnet, daß der Kaltwasserkreislauf durch ein Kältemittel in einem Wärmetauscher (15) auf eine vorbestimmt veränderbare Kaltwassertemperatur, z.B. 8 Grad Celsius, bringbar ist.

5. Anordnung nach Anspruch 1 und 4, dadurch gekennzeichnet, daß dem Kaltwasserkreislauf ein Bypass (18) zugeordnet ist und daß die Temperierstelle (2) des Kaltwasserkreislaufs im Bypass (18) angeordnet ist.

6. Anordnung nach Anspruch 1, dadurch gekennzeichnet, daß das Warmöl des Warmölkreislaufs in einem Heizgefäß (22) mittels einer elektrischen Heizeinrichtung (22') erwärmbar und durch am Kaltwasserkreislauf abzweigbares Kaltwasser in einem dem Heizgefäß zugeordneten Wärmetauscher (23) kühlbar ist.

7. Anordnung nach Anspruch 1, dadurch gekennzeichnet, daß das Heizöl des Heißölkreislaufs in einem Heizgefäß (33) mittels einer elektrischen Heizeinrichtung (33') heizbar ist und der Heißölkreislauf über eine Drosselstelle (34) permanent am Warmölkreislauf anliegt.

8. Anordnung nach Anspruch 1, 3 und 5 bis 7, dadurch gekennzeichnet, daß der Wärmetauscher (15) für Kaltwasser mit den Vorlauf -(12) und Rücklaufleitungen (13) und mindestens die Zu-(17) und Ableitungen (16) für das Kältemittel sowie die Heizgefäße (22, 33) für Warmöl und Heißöl mit den zugehörigen Vor- (20, 25) und Rückläufen (21, 26) und einer Kühleinrichtung (23) für das Warmöl zu einem gemeinsamen Gerätesatz zusammengefaßt sind.

9. Anordnung nach Anspruch 1 und 5, dadurch gekennzeichnet, daß die Mischventile (31) für das Warm- und Heißöl bzw. die Mischventile (31) und das Steuerventil (19) für den Bypass gemeinsam in einer Ventilstation angeordnet sind.

10. Anordnung nach Anspruch 1, dadurch gekennzeichnet, daß Einrichtungen zur Überwachung und Steuerung der Temperaturen in den Temperierstellen und in den Kreisläufen für Kaltwasser, Warmöl und Heißöl vorgesehen sind und daß die Überwachungs- und Steuerungseinrichtungen gemeinsam in einem schrankförmigen Aufnahmebehälter angeordnet sind.

0123034